# EUROPEAN PATENT SPECIFICATION

(11) **EP 2 165 631 B1**
(45) Date of publication and mention of the grant of the patent: **06.11.2013**
(21) Application number: 09170430.4
(22) Date of filing: 16.09.2009
(51) Int. Cl.: A47J 37/07

(54) **Barbecue**
Grillvorrichtung
Barbecue

(30) Priority: 19.09.2008 IT PD20080267
(43) Date of publication of application: 24.03.2010
(73) Proprietor: Ompagrill S.r.l., 36027 Rosa' (VI) (IT)
(72) Inventor: Parolin, Pietro Fabrizio, 36027, ROSA' VI (IT)
(74) Representative: Modiano, Micaela Nadia

(56) References cited:
- EP-A- 1 462 045
- DE-A1- 10 151 402
- DE-U1- 9 414 361
- US-A1- 2006 266 345

## Description

The present invention relates to a barbecue.

Barbecues are already known which comprise a brazier, in which the fuel, generally consisting of charcoal, is placed, which is used to cook meat or other food placed on an upper grille.

The two main problems observed in these known types of barbecue consist in difficulty in lighting the coal, even though traditional fire starter blocks are used for them, and in the awkwardness and laboriousness of collecting the ash.

Fire starter blocks in fact must be placed below the charcoal and this entails difficulty in lighting them in addition to the risk that the overlying coal may smother the flame.

In order to eliminate this drawback, a barbecue has been devised which comprises a brazier with a grille-like bottom that can be removed and a column-like tubular support with a base for resting on the ground, such barbecue, having, below the grille-like bottom, a tray for supporting fire starter blocks, which can be extracted and is coupled slidingly to the tubular support.

Such tray, as well as the guide that supports it inside the column-like tubular support, have a perforated bottom for allowing the ash to fall toward the base.

The tray is also provided with a grip handle, which allows its insertion and extraction maneuver.

Such perforated tray, despite being useful for inserting and positioning the fire starter blocks, is not useful at all for collecting the ash, which accumulates at the base.

Moreover, for such known barbecues the provision of the tray is possible only because of the presence of the column-like tubular support in which the tray is inserted.

However, such column-like support with a base requires from the manufacturer investments in raw material and labor that inevitably affect the final cost for the buyer.

Barbecues are also known in which, instead of a removable tray for convenient placement of the fire starter blocks, there is a simple perforated bracket, which is fixed stably within the column-like tubular support at and below the grille-like bottom of the brazier; with this solution, there is no possibility to remove the support after lighting of the fire without the danger of getting burnt, and accordingly new blocks can be placed only with great risks of bums or only after cooling has occurred.

In order to solve the drawback of the falling of ash from the grille-like bottom, these known barbecues are equipped with a lower collecting plate, at the base, which can be opened in a lever-like fashion in order to make the ash that has gathered in the column-like support fall to the ground.

Barbecues also exist and are known which have a removable tray below the brazier for collecting the ash, but since such tray has to collect the ash, it is not appropriately perforated to allow the arrangement of fire starter blocks on it, such blocks instead requiring sufficient air to bum properly.

EP 1 462 045 discloses a barbecue having a brazier receptacle connected to a column-like tubular support having a cut-out through which an ash tray is engaged below the brazier. The ash tray has a solid bottom and side walls provided with air passages. Supported on the bottom of the tray is a raised supporting surface for a lighting means.

The aim of the present invention is to eliminate the drawbacks noted above in known types of barbecue.

Within this aim, an object of the invention is to increase convenience in use for the user, and in particular make fire starting easier and more certain and at the same time make barbecues easier to clean.

Another object is to provide a barbecue that is cheaper to manufacture for an equal performance.

Another object is to use equipment and systems that are per se known.

In accordance with the invention, there is provided a barbecue as defined in the appended claims.

Further characteristics and advantages of the invention will become better apparent from the following detailed description of two embodiments thereof, illustrated by way of non-limiting example in the accompanying drawings, wherein:
Figure 1 is a perspective view of a barbecue according to the invention;
Figure 2 is an exploded perspective view of the barbecue of Figure 1;
Figure 3 is a perspective view of the tray;
Figure 4 is a sectional side view of the barbecue according to the invention, in a first configuration for use;
Figure 5 is a sectional side view of the barbecue according to the invention, in a second configuration for use;
Figure 6 is a side view of the barbecue according to the invention, in a second embodiment thereof;
Figure 7 is a partially sectional side view of the barbecue of Figure 6.

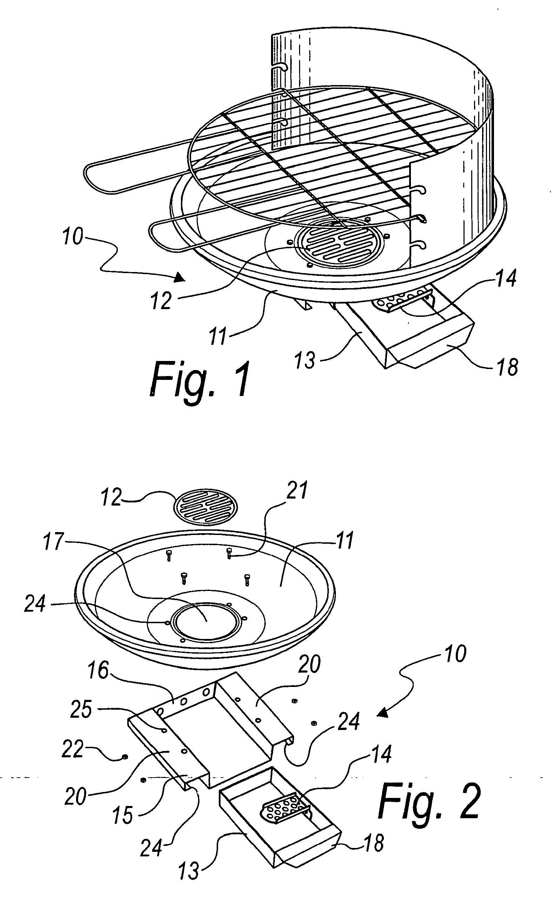

With reference to the figures, a barbecue according to the invention is generally designated by the reference numeral 10 in its first embodiment in Figure 1.

The barbecue 10 comprises a brazier 11 with a bottom 12, provided with ventilation holes, which can be removed, for the fuel to be burned.

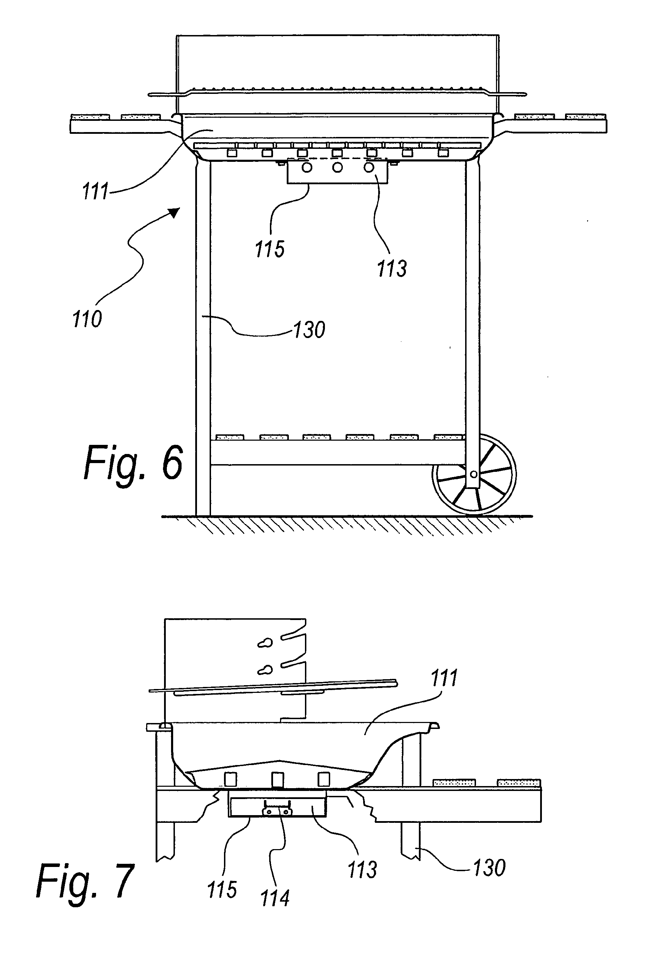

The perforated bottom 12 can be of the grille-like type, typical of braziers having a circular plan shape, or slotted, a typical solution for "rectangular" braziers (reference should be made to the second embodiment in Figure 6).

A removable tray 13 for collecting ash is arranged below the perforated bottom 12.

The removable tray 13 supports inside a bracket 14 for supporting fire starter blocks or other similar and equivalent solid fuel.

The removable tray 13 is coupled slidingly below the brazier 11 by means of a complementarily shaped guiding tray 15.

As mentioned above, it should be understood that the brazier 11 may have any shape and size.

The bracket 14 has ventilation holes for providing oxygen to the blocks.

The complementary tray 15 has ventilation holes on at least one face 16, so as to ensure and adjust the necessary flow of air for feeding the embers.

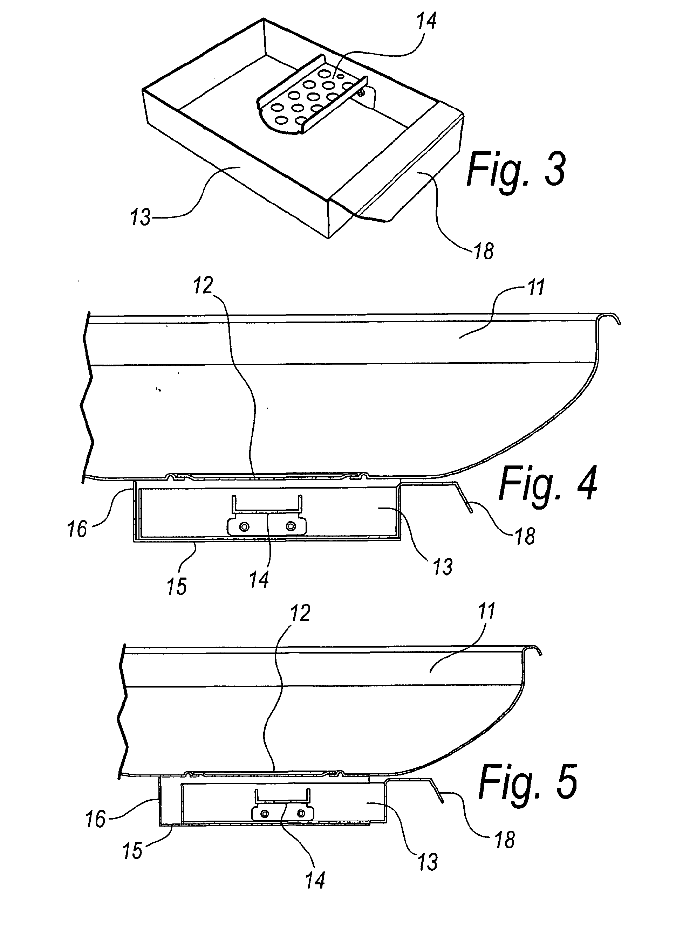

Adjustment of the draft of the brazier 11 is possible by maneuvering the tray 13 by means of a grip handle 18 thereof, as shown in Figures 4 and 5: in Figure 4, the tray 13 is fully inserted in the complementary tray 15, while in Figure 5 the tray 13 is partly opened in order to improve draft and facilitate combustion.

The complementary guiding tray 15 has folded lateral flaps 20 which are available for fixing the complementary tray 15 to the bottom of the brazier 11.

The means for mutual fixing of the brazier 11 and the complementary guiding tray 15 consist of screws and corresponding bolts 21 and 22 respectively.

It should be understood that the fixing between the brazier 11 and the complementary guiding tray 15 is also possible with other means and systems, for example by means of spot welds.

The complementary tray 15 is provided appropriately with a closed bottom for user safety reasons.

If a user pulled out the tray 13 by mistake while the embers were burning in the overlying brazier 11, there would in fact be the risk that some of said burning embers might fall to the ground, with consequent risks of fire or bums.

The closed bottom of the complementary tray 15 prevents this from happening.

The tray 13 is made of pressed or blanked sheet metal, which is then perforated and folded.

Likewise, the complementary tray 15 and the bracket 14 are provided by cutting, perforating and folding sheet metal.

The bracket 14 is fixed within the tray 13 by means of screws and bolts or by means of rivets or spot welds or other similar and equivalent systems.

The lateral flaps 20 of the complementary tray 15 are folded so as to form two edges 24 having a C-shaped cross-section, for the resting and engagement of a stand, which is not shown for the sake of simplicity.

Figure 6 illustrates a barbecue according to the invention in a second embodiment, designated by the reference numeral 110.

The barbecue 110 has a brazier 111 that has a substantially rectangular plan shape and is supported by a trolley 130.

A complementary tray 115 with a tray 113 is fixed below the brazier 111, and a bracket 114 for fire starter blocks or other similar solid fuel is present inside said tray, in a manner similar to what has been described for the first embodiment of the invention.

The solution with the guiding complementary tray 15 or 115 and the tray 13 or 113 can thus be installed below braziers of any shape and size, whether round, square or rectangular and the like.

Conveniently, the metal sheets for providing the braziers such as 11 and 111 are perforated by means of a same pressing tool, so as to have the same central hole 17 and the same holes 24, for the screws 17, with the same center distance.

In this manner it is possible advantageously to prepare braziers having different shapes and dimensions, all of which are however preset for the fixing of a complementary tray 15 (or 115) that is provided correspondingly with holes 25 designed to face the holes 24 of the bottom of the brazier.

The holes 24 and 25 for the fixing screws are mutually equidistant and are equidistant from the axis of the central hole 17; in this manner, the complementary tray 15 and the tray 13 can be arranged so as to be directed toward the front part of the barbecue or the lateral or rear part, depending on the requirements and needs.

In practice it has been found that the intended aim and objects of the present invention have been achieved.

The barbecue 10 according to the invention in fact has a supporting bracket 14 for the fire starter blocks which is fixed inside a tray 14, which is provided no longer for supporting the fire starter blocks but for collecting the ash.

Moreover, the tray 13 is no longer supported within a column-like tubular support but by a simple and low-cost complementary tray 15, which is fixed directly below the brazier 11.

This solution with a guiding complementary tray 15 fixed to the brazier 11 allows cheaper manufacture, by renouncing the column-like tubular structure that is typical of known barbecues.

The fire starter block supporting bracket 14 in the tray 13 provided in the invention makes it possible to achieve the objects of simple and easy replacement or addition of fire starter blocks if the fire starter blocks, for example due to excessive moisture present on the charcoal, have not achieved their goal upon first lighting.

The materials employed, as long as they are compatible with the contingent use, as well as the dimensions, may be any according to requirements.

The disclosures in Italian Patent Application No. PD2008A000267 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A barbecue (10), comprising a brazier (11) with a bottom (12) with ventilation holes for the fuel to be burned and, below the bottom (12), a removable tray (13) for collecting ash, which carries inside it a supporting bracket (14) for fire starter blocks or other solid fuel, said tray (13) being slidingly coupled below the brazier (11), **characterized in that** said removable tray (13) is coupled slidingly below the brazier (11) by means of said removable tray (13) being slidably inserted in a complementary shaped guiding tray (15) having a closed bottom and folded lateral flaps (20) which fix said complementary tray (15) to the bottom of the brazier (11).

2. The barbecue according to claim 1, **characterized in that** said bracket (14) has ventilation holes for providing oxygen to the fire starter blocks or other solid fuel.

3. The barbecue according to the preceding claims, **characterized in that** at least said complementary tray (15) has ventilation holes on at least one face (16) so as to ensure and adjust the necessary flow of air for feeding the embers.

4. The barbecue according to the preceding claims, **characterized in that** the means for mutually fixing the brazier (11) and the guiding complementary tray (15) consist of screws and corresponding bolts (21, 22).

5. The barbecue according to the preceding claims, **characterized in that** said lateral flaps (20) of the complementary tray (15) are folded so as to form two resting and engagement edges (24) having a C-shaped cross-section for a stand.

6. The barbecue according to one or more of the preceding claims, **characterized in that** the metal sheets for providing the braziers (11, 111) are perforated by means of a same pressing tool, so as to have the same central hole (17) and the same holes (24) for said screws (17), with the same center distance, said braziers (11, 111) being preset for fixing a complementary tray (15, 115) that is perforated correspondingly with holes (25) designed to face the holes (24) on the bottom of the brazier.

7. The barbecue according to the preceding claim, **characterized in that** said holes (24) for the fixing screws are mutually equidistant and are equidistant from the axis of the central hole (17).

## Patentansprüche

1. Eine Grillvorrichtung (10), die Folgendes umfasst: ein Kohlenbecken (11) mit einem Boden (12) mit Belüftungslöchern für den zu verbrennenden Brennstoff und unterhalb des Bodens (12) eine herausnehmbare Schale (13) zum Sammeln von Asche, die innen eine Tragpratze (14) für Grillanzünderblöcke oder anderen festen Brennstoff trägt, wobei die Schale (13) verschiebbar unterhalb des Kohlenbeckens (11) gekoppelt ist, gekennzeichnet, dass die herausnehmbare Schale (13) verschiebbar unterhalb des Kohlenbeckens (11) gekoppelt ist, durch die herausnehmbare Schale (13) verschiebbar in eine komplementär geformte Führungsschale (15) eingesetzt ist, die einen geschlossenen Boden und abgeknickte Seitenklappen (20) hat, welche die komplementäre Schale (15) am Boden des Kohlenbeckens (11) befestigen.

2. Die Grillvorrichtung gemäß Anspruch 1, **dadurch gekennzeichnet, dass** die Tragpratze (14) Belüftungslöcher hat, um den Grillanzünderblöcken oder anderem festen Brennstoff Sauerstoff zuzuführen.

3. Die Grillvorrichtung gemäß den obigen Ansprüchen, **dadurch gekennzeichnet, dass** mindestens die komplementäre Schale (15) in mindestens einer Fläche (16) Belüftungslöcher hat, um die notwendige Luftströmung zur Versorgung der glimmenden Asche sicherzustellen und anzupassen.

4. Die Grillvorrichtung gemäß den obigen Ansprüchen, **dadurch gekennzeichnet, dass** die Mittel zur gegenseitigen Fixierung des Kohlenbeckens (11) und der komplementären Führungsschale (15) aus Schrauben und entsprechenden Bolzen (21, 22) bestehen.

5. Die Grillvorrichtung gemäß den obigen Ansprüchen, **dadurch gekennzeichnet, dass** die Seitenklappen (20) der komplementären Schale (15) geknickt sind, um zwei Auflage- und Eingriffskanten (24) zu bilden, die einen C-förmigen Querschnitt haben, für ein Gestell.

6. Die Grillvorrichtung gemäß einem oder mehreren der obigen Ansprüche, **dadurch gekennzeichnet, dass** die Metallbleche zur Bereitstellung der Kohlenbecken (11, 111) unter Verwendung desselben Presswerkzeugs perforiert werden, um so das gleiche zentrale Loch (17) und die gleichen Löcher (24) für die Schrauben (17), mit demselben Mittenabstand, zu haben, wobei die Kohlenbecken (11, 111) voreingestellt sind zur Befestigung einer komplementären Schale (15, 115), die entsprechend mit Löchern (25) perforiert ist, welche dazu dienen, den Löchern (24) im Boden des Kohlenbeckens gegenüberzuliegen.

7. Die Grillvorrichtung gemäß dem obigen Anspruch, **dadurch gekennzeichnet, dass** die Löcher (24) zur Befestigung von Schrauben äquidistant voneinander und äquidistant von der Achse des zentralen Lochs (17) sind.

## Revendications

1. Barbecue (10) comprenant un brasero (11) avec un fond (12) présentant des trous de ventilation pour le combustible à brûler et, au-dessous du fond (12), un plateau amovible (13) pour collecter la cendre, plateau qui porte à l'intérieur un support (14) pour cubes allume-feu ou autres combustibles solides, ledit plateau (13) étant couplé de manière coulissante au-dessous du brasero (11), **caractérisé en ce que** ledit plateau amovible (13) est couplé de manière coulissante au-dessous du brasier (11) du fait qu'il est inséré de façon coulissante dans un plateau de guidage (15) de forme complémentaire ayant un fond fermé et des volets latéraux repliés (20) qui fixent ledit plateau complémentaire (15) au fond du brasero (11).

2. Barbecue suivant la revendication 1, **caractérisé en ce que** ledit support (14) présente des trous de ventilation destinés à alimenter en oxygène les cubes allume-feu ou autres combustibles solides.

3. Barbecue suivant les revendications précédentes, **caractérisé en ce qu'**au moins ledit plateau complémentaire (15) présente des trous de ventilation sur au moins une face (16) de manière à assurer et ajuster le flux d'air nécessaire pour alimenter les braises.

4. Barbecue suivant les revendications précédentes, **caractérisé en ce que** le moyen pour fixer l'un à l'autre le brasero (11) et le plateau de guidage complémentaire (15) consiste en vis et écrous correspondants (21, 22).

5. Barbecue suivant les revendications précédentes, **caractérisé en ce que** lesdits volets latéraux (20) du plateau complémentaire (15) sont repliés de manière à former deux bords portants et s'emboîtant (24) ayant une section transversale en forme de C pour un socle.

6. Barbecue suivant une ou plusieurs des revendications précédentes, **caractérisé en ce que** les feuilles métalliques destinées à fournir les braseros (11, 111) sont perforées au moyen d'un même outillage de compression, de sorte à avoir le même trou central (17) et les mêmes trous (24) pour lesdites vis (17), avec la même distance de centre, lesdits braseros (11, 111) étant préréglés pour fixer un plateau complémentaire (15, 115) qui est perforé de façon correspondante de trous (25) conçus pour être en face des trous (24) du fond du brasero.

7. Barbecue suivant la revendication précédente, **caractérisé en ce que** lesdits trous (24) pour les vis de fixation sont équidistants l'un par rapport à l'autre et par rapport à l'axe du trou central (17).
